**Europäisches Patentamt**

**European Patent Office**

**Office européen des brevets**

(11) Veröffentlichungsnummer: **0 160 782**

**B1**

# (12) EUROPÄISCHE PATENTSCHRIFT

(45) Veröffentlichungstag der Patentschrift:
**19.04.89**

(21) Anmeldenummer: **85101349.0**

(22) Anmeldetag: **28.10.82**

(51) Int. Cl.⁴: **B 01 D 29/10,** B 29 B 17/02,
B 29 C 47/00

(54) Vorrichtung zum Trennen von Materialien unterschiedlicher Konsistenz.

(30) Priorität: **19.11.81 DE 3145906**
**21.10.82 DE 3239030**

(43) Veröffentlichungstag der Anmeldung:
**13.11.85 Patentblatt 85/46**

(45) Bekanntmachung des Hinweises auf die Patenterteilung:
**19.04.89 Patentblatt 89/16**

(84) Benannte Vertragsstaaten:
**AT BE CH DE FR GB IT LI NL SE**

(56) Entgegenhaltungen:
**AT-B-300 313**
**AT-B-363 407**
**DD-A-144 229**
**DE-A-2 700 542**
**DE-A-2 823 092**
**DE-A-2 947 673**
**DE-C-861 548**
**US-A-3 093 579**
**US-A-3 126 818**
**US-A-4 177 234**

(73) Patentinhaber: **Gail, Josef, Klausenweg 4, D-8890 Aichach (DE)**

(72) Erfinder: **Gail, Josef, Klausenweg 4, D-8890 Aichach (DE)**

(74) Vertreter: **Liska, Horst, Dr., Patentanwälte H. Weickmann, Dr. K. Fincke, F.A. Weickmann, B. Huber, Dr. H. Liska, Dr. J. Prechtel Möhlstrasse 22 Postfach 86 08 20, D-8000 München 86 (DE)**

LIBER, STOCKHOLM 1989

## Beschreibung

Die Erfindung betrifft eine Vorrichtung zum Trennen von Materialien unterschiedlicher Konsistenz, insbesondere zum Trennen von Thermoplastkunststoff-Feststoff-Gemischen oder Gemischen aus unterschiedlich schmelzbaren Kunststoffen, mit einem Gehäuse, einem in einer Kammer des Gehäuses gehaltenen, hohlzylindrischen Filterkörper mit radialer Filterdurchlaßrichtung, einer in dem Gehäuse gelagerten, gleichachsig zum Filterkörper drehend angetriebenen Schaberwelle, welche den Filterkörper unter Bildung eines Ringraums axial durchsetzt und in dem Ringraum an ihrem Mantel wenigstens einen zum Filterkörper radial abstehenden Schaber trägt, mit einer das Materialgemisch unter Druck in den Ringraum einführenden Fördereinrichtung, einem ersten, mit der Filteraußenseite verbundenen Materialauslaß für das gefilterte Material und einem zweiten, mit der Filterinnenseite verbundenen Materislauslaß mit Rückstaueigenschaft für das Rückstandsmaterial. Eine solche Vorrichtung ist z. B. aus der DE-A-2 837 621 bekannt.

Bei einer Vielzahl Herstellungsprozesse fallen große Mengen Abfallmaterial aus thermoplastischem Kunststoff an. Die Kunststoffabfälle sind jedoch meist durch Metallbeschichtungen, wie z. B. in der Verpackungsindustrie oder durch Drahtabfälle, wie in der Kabelindustrie verunreinigt. Da thermoplastische Kunststoffe durch Erwärmen plastifizierbar sind, bieten sie sich zur Wiederaufbereitung an.

Aus der deutschen Offenlegungsschrift DE-A-2 837 621 ist eine Trennvorrichtung zur Wiederaufbereitung von thermoplastischem Kunststoff bekannt, der durch Metallfolienabfälle, insbesondere Aluminium, verunreinigt ist. Das zu trennende Kunststoffgemisch wird in einem Extruder plastifiziert und mit hohem Druck durch einen hohlzylindrischen Filterkörper gedrückt. Der die Metallabfälle enthaltende Filterungsrückstand verstopft die Öffnungen des Filterkörpers und wird deshalb kontinuierlich mittels einer Reinigungsschnecke aus dem Filterkörperinnenraum abgeführt. Es hat sich jedoch gezeigt, daß die Reinigungswirkung der Schnecke nur unzureichend ist und sich bereits nach kurzer Betriebszeit der Rückstand nicht mehr vom Filterkörper abschieben läßt.

Die mangelhafte Reinigungswirkung der Schnecke wird wesentlich durch die Art der benutzten Filterkörper hervorgerufen. Herkömmliche Filterkörper zum Trennen von Kunststoffen bestehen aus einer Vielzahl gleichachsig angeordneter Scheiben, von denen jede eine umlaufende Nut in einer ihrer Scheibenflächen aufweist, die mit der gegenüberliegenden Scheibenfläche der benachbarten Ringscheibe einen Ringkanal bildet. Zwischen dem Innenrand und der Ringnut sind in den dort verbliebenem, ringförmigen Steg eine Vielzahl radialer Rillen eingearbeitet, beispielsweise eingepreßt, die bei zusammengesetzten Ringscheiben die Filteröffnungen des Filterkörpers bilden. Da bei dem Filterkörper außerordentlich hohe Drücke, von beispielsweise 200 bar und mehr auftreten, wird das Rückstandsmaterial trotz hoher axialer Paketspannkräfte des Filterkörpers zwischen die Scheiben eingedrückt, so daß es nicht mehr entfernt werden kann, und der Filterkörper unbrauchbar wird.

Aufgabe der Erfindung ist es, die vorstehend erläuterte Trennvorrichtung so zu verbessern, daß das Rückstandsmaterial auch im Dauerbetrieb vollständig von der Filterinnenseite entfernt werden kann und das Verstopfen und die übermäßige Abnutzung des Filterkörpers durch Rückstandsansammlungen vermieden wird. Diese Aufgabe wird erfindungsgemäß dadurch gelöst, daß in der Umlaufbahn oder deren Umfangsverlängerung des bzw. der Schaber jeweils wenigstens eine Auslaßöffnung des zweiten Materialauslasses vorgesehen ist, die den Filterkörper radial durchbricht.

Im Gegensatz zu herkömmlichen Trennvorrichtungen, bei welchen die Reinigungsschnecke das Rückstandsmaterial während mehrerer Umdrehungen über die gesamte axiale Länge des Filterkörpers abtransportiert, fördern die Schaber gemäß der vorstehenden Verbesserung das Rückstandsmaterial auf kürzestem Wege zum Materialauslaß. Das Rückstandsmaterial muß von der Filterfläche nicht abgehoben werden, sondern kann den Filterinnenraum durch die Filterfläche hindurch verlassen. Die Erfindung kann sowohl bei Trennvorrichtungen mit einem aus einem einzigen Materialstück gefertigten Filterkörper als auch mit anderen Filterkörpern, beispielsweise Filterscheibenpaketen eingesetzt werden.

In einer bevorzugten Ausführungsform ist vorgesehen, daß ein Reversierantrieb die Schaberwelle mit wechselnder Drehrichtung über einen vorgegebenen Drehwinkel kleiner als 360° hin und her bewegt und daß jede der Auslaßöffnungen in Umfangsrichtung außerhalb durch diesen Drehwinkel bestimmten Bewegungsbahnen der Schaber anschließend angeordnet ist. Die Schaber werden damit nicht über die Auslaßöffnung hinwegbewegt, sondern vorzugsweise nur bis an deren Rand. Aufgrund der wechselnden Drehrichtung wird der Filterinnenmantel besser gereinigt. Zweckmäßigerweise werden Schaber mit gesonderten Schabkanten für die beiden Drehrichtungen eingesetzt.

Die Schaberwelle trägt vorzugsweise mehrere, in axialer Richtung nebeneinander, jedoch höchstens um die axiale Breite ihrer Bewegungsbahnen gegeneinander versetzt angeordnete Schaber. Jeder der Schaber bestreicht lediglich einen Teil des Filterinnenmantels. Die Gesamtheit der Schaber reinigt jedoch den Innenmantel vollständig. Aufgrund der dadurch erreichten Segmentierung der Schabkanten, läßt sich die Kontur der Kanten besser dem Filterinnenmantel anpassen und besser andrücken.

In einer zweckmäßigen Ausführungsform ist vorgesehen, daß jedem Schaber eine Auslaßöffnung zugeordnet ist und daß in axialer Richtung nebeneinander angeordnete Schaber und Auslaßöffnungen in Umfangsrichtung um 180° versetzt angeordnet sind. Die insbesondere als axial verlaufende Schlitze ausgebildeten Auslaßöffnungen überdecken damit lediglich einen Teil der gesamten axialen Länge, was der Festigkeit des Filterkörpers zugute kommt.

Die Schaber können jedoch auch in axialer Richtung in einer Reihe eng benachbart nebeneinander angeordnet sein. Diese Anordnungsweise ist insbesondere dann von Vorteil, wenn am Umfang um 180° versetzt zwei Reihen von in radialer Sicht zickzackförmig nebeneinander angeordneten Schabern vorgesehen sind. Die Eckpunkte der zickzackförmigen Reihen sollen in Umfangsrichtung paarweise spiegelbildlich gegenüberliegen, da dann zwei um 180° in Umfangsrichtung versetzte Reihen von Auslaßöffnungen vorgesehen werden können, bei welchen die Auslaßöffnungen jeder Reihe mit axialem Abstand voneinander und axial versetzt zu den Auslaßöffnungen der anderen Reihe angeordnet sind. Auch hier erstreckt sich jede Auslaßöffnung nur über einen Teil der axialen Länge des Filterkörpers. Darüber hinaus müssen die Schaber den Materialrückstand nur über einen Weg von weniger als 180° abführen. Die zickzackförmige Anordnungsweise der Schaber erlaubt Auslaßöffnungen mit relativ großem Querschnitt und damit das Abtrennen von relativ großen Feststoffstücken. Optimal geeignet sind Auslaßöffnungen mit rautenförmigem Querschnitt.

Der Materialauslaß für das Rückstandsmaterial muß Rückstaueigenschaften haben, um zu verhindern, daß aufgrund des hohen Drucks in dem Filterkörper das an sich fließfähige Rückstandsmaterial mit einem zu hohen Anteil an ungefiltertem Material abströmen kann. Für die Trennung von Materialgemischen, die thermoplastischen Kunststoff enthalten, kann dies in der Weise erfolgen, daß der zweite Materialauslaß das Rückstandsmaterial über wenigstens einen mittels einer Kühleinrichtung abkühlbaren Kühlkanal abführt, an dessen Auslaßende eine Querschnittsverengung vorgesehen ist. Die Kühleinrichtung kühlt das Rückstandsmaterial zu einer dem Innendruck des Filterkörpers widerstehenden Masse ab, die sich an der Querschnittsverengung abstützen kann und somit den Kühlkanal verschließt. Um einen ungehinderten Abfluß des Rückstandsmaterials, insbesondere im Bereich der Kühleinrichtung sicherzustellen, erweitern sich die Kanäle des zweiten Materialauslasses konisch in Abflußrichtung.

Der Durchsatz an Rückstandsmaterial wird zweckmäßigerweise thermisch gesteuert. Dies kann durch Regelung der Kühleinrichtung erfolgen oder aber durch eine zusätzliche Heizeinrichtung im Bereich der Querschnittsverengung des Kühlkanals. Die Temperaturregelung erfolgt bevorzugt abhängig vom Druck des Materialgemisches in dem Filterkörper. Steigt der Druck an, so wird die Kühlleistung der Kühleinrichtung erniedrigt bzw. die Heizleistung der Heizeinrichtung erhöht, um den Abfluß des Rückstandsmaterials zu erleichtern. Beim Absinken des Filterinnendrucks wird im entsprechend umgekehrten Sinn geregelt.

Zur Regelung des Rückstandsmaterialabflusses kann im zweiten Materialauslaß auch eine Dosierschnecke vorgesehen sein. Soweit nicht bereits die Staueigenschaften der Dosierschnecke zur Erzeugung eines ausreichenden Filterinnendrucks genügt, kann wiederum eine Kühleinrichtung vorgesehen sein, die das Rückstandsmaterial im Bereich der Dosierschnecke, insbesondere an deren Ausgang zu einer dem Filterinnendruck widerstehenden Masse abkühlt. Die erstarrte Masse stützt sich hierbei an den Windungen der Schnecke ab. Im Schneckenmantelrohr ist im Bereich des Auslaßendes bevorzugt wenigstens eine axiale Nut vorgesehen, die das Mitdrehen der in der Schnecke erstarrten Rückstandsmasse mit der Schnecke verhindert. Der Rückstandsmaterialdurchsatz läßt sich über die Temperatur der Kühleinrichtung aber auch über die Drehzahl der Dosierschnecke regeln. Die Regelung kann wiederum abhängig vom Filterinnendruck erfolgen. Soweit der Materialrückstand Metall enthält, erfolgt die Regelung der Temperatur der Kühleinrichtung oder der Drehzahl der Dosierschnecke bevorzugt abhängig vom Metallanteil des Rückstandsmaterials, der sich zweckmäßigerweise mit einem kapazitiven Sensor messen läßt.

Die Dosierschnecke kann so ausgebildet sein, daß sie das Rückstandsmaterial im gesamten Umfangbereich ihres Schneckenmantelrohrs abfördert. Da das Rückstandsmaterial im Bereich der Dosierschnecke abzukühlen ist, kann dies im Einzelfall zu relativ langen und konstruktiv aufwendigen Schneckenkonstruktionen führen. Von Vorteil können deshalb Ausführungsformen sein, bei welchen der zweite Materialauslaß mehrere über den Umfang der Dosierschnecke verteilte Auslaßkanäle umfaßt, in die die Dosierschnecke über einen Teil der radialen Weite der Kanäle eingreift. Die Auslaßkanäle können problemlos so weit bemessen sein, daß auch relativ große Materialabfälle, beispielsweise Metallabfälle im Rückstandsmaterial enthalten sein können. Trotzdem wird die Abkühlung des Rückstandsmaterials in den Auslaßkanälen erleichtert. Das Rückstandsmaterial wird zweckmäßigerweise bereits vor Erreichen der Dosierschnecke bereits weitgehend abgekühlt.

Die Auslaßgeschwindigkeit wird durch die Drehzahl der Dosierschnecke gesteuert, deren Gänge sich in das Rückstandsmaterial eingraben und es zur Erzeugung eines ausreichenden Filterinnendrucks stauen. Die Dosierschnecke steht vorzugsweise über einen Freilauf mit der Schaberwelle in Antriebsverbindung.

Der Filterinnendruck der Trennvorrichtung erreicht, insbesondere beim Trennen thermoplastischer Konststoffe sehr hohe Werte, beispielsweise in der Größenordnung 500 bar. Um Axialdrücke auf die Schaberwelle in dieser Größenordnung zu vermeiden, ist die Schaberwelle axial beiderseits des Filterkörpers bevorzugt an gleich großen Wellendurchmessern in dem Gehäuse gelagert.

Konstruktiv einfache Ausführungsformen ergeben sich, wenn die Schaberwelle einen Rahmenteil des Gehäuses durchsetzt, an dem auf der axial einen Seite der Filterkörper gehalten ist und auf der axial anderen Seite die Schaberwelle mit einem Antrieb gekuppelt ist. Der zwischen der Schaberwelle und dem Filterkörper gebildete Ringraum setzt sich zweckmäßigerweise zwischen der Schaberwelle und einer Wellendurchtrittsöffnung in dem Rahmenteil fort. Ein Zuführkanal der Fördereinrichtung mündet quer in diesen sich fortsetzenden Ringraum ein. Auch die Kanäle des ersten Materialauslasses, über die das gefilterte Material abgeführt wird, verlaufen zumindest abschnittsweise durch den Rahmenteil. Zwischen dem Rahmenteil und dem Filterkörper kann hierzu ein Sammelringkanal vorgesehen sein, in den die Kanäle des ersten Materialauslasses münden und über den sie mit Auslaßdüsen verbunden sind. Die Zufuhr und Abfuhr des Materials erfolgt von derselben axialen Seite des Filterkörpers, der damit mit geringem Zeitaufwand ausgewechselt werden kann.

Damit der Filterkörper nicht nur den hohen Innendrücken besser standhält, sondern auch besser gereinigt werden kann und ein höherer Durchsatz an gefiltertem Material mit hohem Reinheitsgrad erreicht wird, ist ferner bei einem bevorzugten Ausführungsbeispiel vorgesehen, daß der Filterkörper aus einem rohrförmigen Materialstück besteht, in dessen äußere Umfangsfläche unter Bildung von einstückig mit dem Filterkörper verbundener radialer Erhebungen radiale Vertiefungen eingeformt sind, die sich mit den Erhebungen abwechseln, daß in den Vertiefungen den Filterkörper radial durchdringende Filterlöcher vorgesehen sind, daß die Erhebungen des Filterkörpers an der inneren Umfangsfläche der Kammer anliegen und daß der bzw. die Schaber radial federnd gegen die innere Umfangsfläche des Filterkörpers vorgespannt sind. Maßnahmen der vorstehenden Art sind jedoch nicht gegenstand des Patents sondern werden in dem Europäischen Patent 78 064 beansprucht.

Im folgenden sollen Ausführungsbeispiele der Erfindung anhand von Zeichnungen näher erläutert werden. Es zeigt

Fig. 1 einen schematischen Axiallängsschnitt durch eine Ausführungsform einer Trennvorrichtung für Materialgemische, welche thermoplastischen Kunststoff enthalten;

Fig. 2 eine Teilansicht, gesehen im Axiallängsschnitt durch den Filterkörper der Trennvorrichtung gemäß Fig. 1;

Fig. 3 eine nicht maßstabgerecht vergrößerte Seitenansicht des Filterkörpers der Trennvorrichtung nach Fig. 1;

Fig. 4 eine teilweise Draufsicht auf die Außenfläche einer anderen Ausführungsform eines in der Trennvorrichtung nach Fig. 1 verwendbaren Filterkörpers;

Fig. 5 einen Axialquerschnitt durch die Trennvorrichtung nach Fig. 1 entlang einer Linie VIII - VIII;

Fig. 6 einen Axialquerschnitt durch eine Schaberwelle der Trennvorrichtung nach Fig. 1, gesehen entlang einer Linie IX - IX;

Fig. 7 die schematische Abwicklung des Umfangsmantels einer anderen Ausführungsform einer Schaberwelle, insbesondere zur Verwendung bei einer Trennvorrichtung nach Fig. 1;

Fig. 8 einen schematischen Teilschnitt durch eine Trennvorrichtung mit von der Trennvorrichtung nach Fig. 1 abweichendem Materialauslaß für das Rückstandsmaterial und

Fig. 9 einen Schnitt entlang der Linie XII - XII durch die Trennvorrichtung nach Fig. 8.

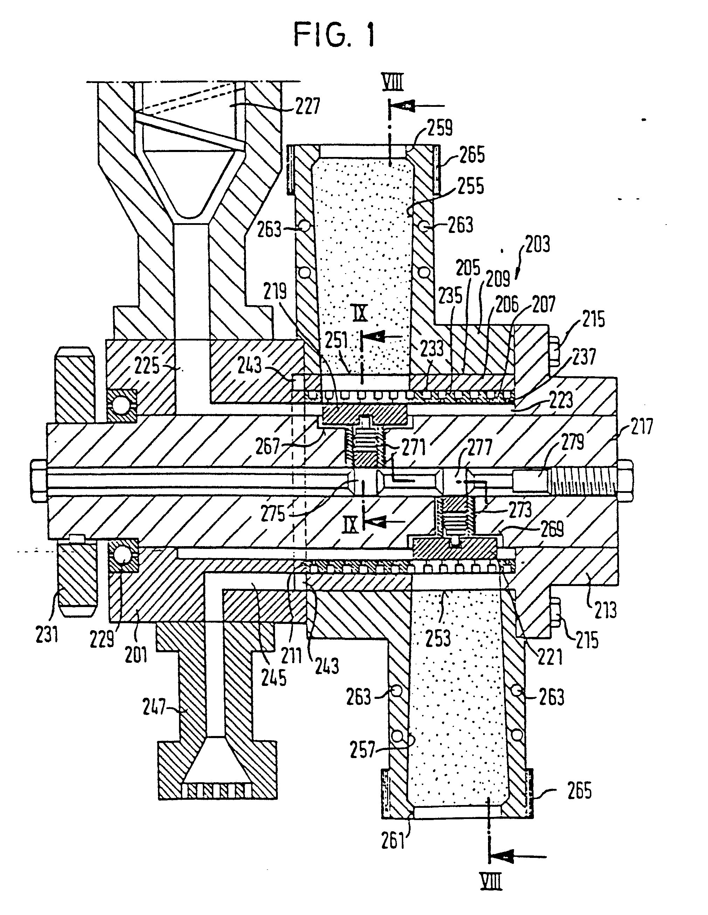

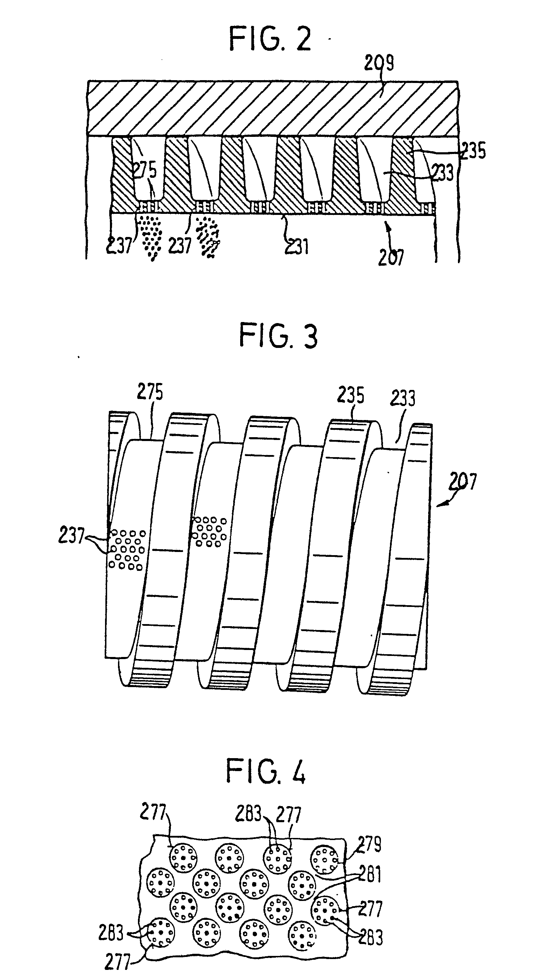

Die Fig. 1 und 2 zeigen eine Ausführungsform einer Trennvorrichtung zur Wiederaufbereitung von Gemischen aus thermoplastischem Kunststoff und Materialabfällen mit höherem Schmelzpunkt. Mittels dieser Trennvorrichtung lassen sich insbesondere sehr harte, abrasive Metallabfälle, wie z. B. Chromabfälle und dergleichen, abtrennen. An einem der Befestigung dienenden Rahmenteil 201 ist ein Filterkopf 203 befestigt, der in einer zylindrischen Kammer 205 eines Hohlzylinders 206 einen hohlzylindrischen Filterkörper 207 enthält. Die Kammer 205 wird durch den von einem im wesentlichen zylindrischen Gehäuseteil 209 aufgenommenen Hohlzylinder 206 einer Stirnfläche 211 des Rahmenteils 201 und einem Lagerdeckel 213 auf der dem Rahmenteil 201 axial abgekehrten Seite nach außen hin begrenzt. Der Lagerdeckel 213 und der Gehäuseteil 209 sind durch axiale Schraubbolzen 215 an dem Rahmenteil 201 befestigt. In dem Rahmenteil 201 und dem Lagerdeckel 213 ist auf axial gegenüberliegenden Seiten des Filterkörpers 207 eine Schaberwelle 217 drehbar, gleichachsig zum Filterkörper 207 gelagert. Die Schaberwelle 217 trägt an ihrem Umfang nachstehend noch näher erläuterte Schaber 219, 221, die axial und in Umfangsrichtung gegeneinander versetzt am Innenmantel des Filterkörpers 207 federbelastet anliegen. Der Durchmesser der Schaberwelle 217 ist im Bereich des Filterkörpers 207 kleiner als der Innendurchmesser des Filterkörpers 267, so daß im Bereich des Filterkörpers 207 ein Ringraum 223 entsteht. Der Ringraum 223 setzt sich in den Rahmenteil 201 hinein fort und ist innerhalb des Rahmenteils 201 über einen radial zur Schaberwelle 217 verlaufenden Kanal 225 mit einem das Kunststoffmaterialgemisch plastifizierenden und unter hohem Druck zuführenden Extruder 227 verbunden. Die Schaberwelle 217 ist beiderseits des Ringraums 223 an gleich großen Wellendurchmessern im Lagerteil 201 bzw. dem Lagerdeckel 213 gelagert, um keine Axialdruckkräfte aufnehmen zu müssen. 229 bezeichnet ein radiales Hauptlager der Schaberwelle 217 auf der dem Filterkopf 203 axial fernen Seite des Rahmenteils 201. Auf dieser Seite tritt die Schaberwelle 217 aus dem Rahmenteil 201 aus und ist, beispielsweise über ein Zahnrad 231, mit einer nicht näher dargestellten Antriebsvorrichtung verbunden.

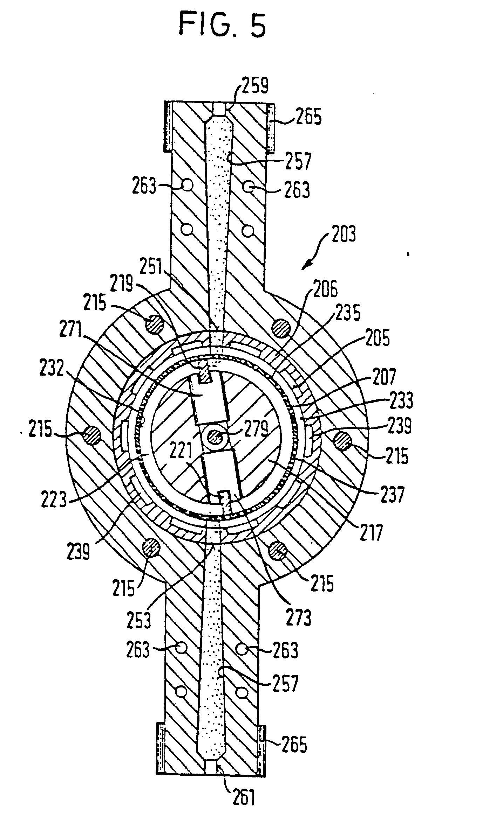

Der Filterkörper 207 besteht, wie aus den Fig. 1 und 5 ersichtlich ist, aus einem einzigen, rohrförmigen Materialstück mit einem glatten Innenmantel 232 und einem Außenmantel in den eine Vielzahl paralleler Umfangsnuten 233 eingearbeitet sind. Zwischen den Nuten 233 verbliebene Umfangsstege 235 stützen sich am Innenmantel des Hohlzylinders 206 ab und leiten die Anpreßkräfte der Schaber 219, 221 auf den Gehäuseteil 209 ab. In den Nuten 233 sind eine Vielzahl radialer Pilteröffnungen 237 vorgesehen, wie dies anhand der Fig. 2 und 3 im einzelnen erläutert wurde.

Die Ringnuten 233 stehen mit axialen Nuten 239 am Innenmantel des hohlen Stützzylinders 206 in Verbindung, die ihrerseits in einen Ringkanal 243 der Stirnseite 211 münden. Von dem Ringkanal 243 verläuft innerhalb des Rahmenteils 201 ein Kanal 245 zu einem Auslaßdüsenkopf 247.

Der thermoplastische Kunststoff in dem vom Extruder 227 in den Ringraum 223 eingepreßten Materialgemisches tritt durch die Filteröffnungen 237 des Filterkörpers 207 in die Ringnuten 235, von wo es über axiale Kanäle 239, den Ringkanal 243, den Kanal 245 und den Auslaßdüsenkopf 247 abgeführt wird.

Das die Feststoffabfälle enthaltende Rückstandsmaterial sammelt sich am Innenmantel des Filterkörpers 207. Es wird von den Schabern 219, 221 zu Auslaßöffnungen 251, 253 transportiert, die den Filterkörper 207 radial durchbrechen. Die Auslaßöffnungen 251, 253 sind als axial verlaufende Schlitze ausgebildet und liegen in der Umfangsverlängerung der Bewegungsbahnen der Schaber 219, 221.

Jedem der Schaber 219, 221 ist eine dieser Auslaßöffnungen 251, 253 zugeordnet. Die Schaber fördern das Rückstandsmaterial damit auf kürzestem Weg zu den Auslaßöffnungen 251, 253.

Die Schaber 219, 221 sind in Achsrichtung der Schaberwelle 217 um ihre Breite gegeneinander versetzt, so daß die Gesamtheit der Schaber den gesamten Innenmantel des Filterkörpers 207 reinigt. Die Bewegungsbahnen der Schaber 219, 221 können sich gegebenenfalls axial geringfügig überlappen. Die Schaber erstrecken sich im wesentlichen in axialer Richtung der Schaberwelle 217.

Die Auslaßöffnungen 251, 253 erstrecken sich lediglich über einen Teil der axialen Länge des Filterkörpers 207. Axial benachbarte Auslaßöffnungen 251, 253 sind gegeneinander winkelversetzt, vorzugsweise um 180°, um die Festigkeit des Filterkörpers 207 nicht allzusehr zu schwächen.

Die Schaberwelle 217 wird in einer hin- und hergehenden Drehbewegung von weniger als 360° rotierend angetrieben, wobei die Schaber 219, 221 das Rückstandsmaterial in beiden Drehrichtungen zu den jeweils zugeordneten Auslaßöffnungen 251 bzw. 253 befördern. Der Drehwinkel ist so bemessen, daß die Schaber 219, 221 nicht über die Auslaßöffnungen 251, 253 hinwegbewegt werden. Entsprechend der Anordnungsweise der Auslaßöffnungen 251, 253 sind auch axial benachbarte Schaber um 180° winkelversetzt.

Im dargestellten Ausführungsbeispiel sind zwei Schaber vorgesehen; es können jedoch auch mehr Schaber vorhanden sein, wobei axial benachbarte Auslaßöffnungen und zugehörige Schaber auch unter einem kleineren Winkel als 180° gegeneinander winkelversetzt sein können.

An die Auslaßöffnungen 251, 253 des Filterkörpers 207 schließen sich im wesentlichen radial verlaufende Auslaßkanäle 255, 257 an, über die das Rückstandsmaterial abgeleitet wird. Die Auslaßkanäle 255, 257 sind an ihrem Auslaßende mit einer Querschnittsverengung 259 bzw. 261 versehen. Eine durch Kühlkanäle 263 angedeutete Kühleinrichtung kühlt den im Rückstandsmaterial enthaltenen Anteil an thermoplastischem Kunststoff zu einer festen Masse ab, die sich an der Querschnittsverengung 259 bzw. 261 abstützt. Die Querschnittsverengungen 259, 261 verhindern damit das ungestörte Abfließen des Rückstandsmaterials über die Auslaßöffnungen 255, 257, so daß sich aufgrund des Rückstaus der zum Trennen des Materialgemisches erforderliche hohe Filterinnendruck aufbauen kann. Um einen ungehinderten Abfluß des Rückstandsmaterials durch die Kanäle 255, 257 bis an die Querschnittsverengungen 259, 261 zu ermöglichen, erweitern sich die Kanäle 255, 257 zum Auslaßende hin konisch.

Im Bereich der Querschnittsverengung 259 bzw. 261 ist jeweils eine Heizeinrichtung 265 vorgesehen, deren Heizleistung abhängig vom Filterinnendruck über eine nicht näher dargestellte Regelschaltung geregelt wird. Die Regelschaltung kann zugleich auch die Kühlleistung der Kühleinrichtung 263 steuern. Als Führungsgröße der Regelung läßt sich anstelle des Filterinnendrucks auch ein anderer Parameter auswerten, bei metallhaltigen Rückstandsmaterialien, beispielsweise der Metallanteil, welcher insbesondere mittels eines kapazitiven Sensors gemessen werden kann.

Die Schaber 219, 221 müssen mit hoher radialer Kraft gegen den Innenmantel des Filterkörpers 207 gedrückt werden. Die Schaber 219, 221 sind hierzu in axial verlaufenden Aussparungen 267, 269 der Schaberwelle 217 radial beweglich geführt. In sich teleskopisch federnde Druckstempel 271, 273 spannen die Schaber 219, 221 federnd nach außen vor. Die Druckstempel 271, 273 sind zwischen den Schabern 219 bzw. 221 einerseits und radialen Nocken 275 bzw. 277 einer gleichachsig die Schaberwelle 217 durchsetzenden, axial verschiebbaren Nockenstange 279 andererseits eingespannt. Zum Einbau bzw. Wechseln des Filterkörpers 207 können die Druckstempel 271, 273 durch axiales Verschieben der Nockenstange 279 entspannt werdon. Der Einbau des Filterkörpers 207 gestaltet sich damit sehr einfach. Dies insbesondere auch deshalb, weil der Kanal 225 des Extruders 227 und der Kanal 245 des Düsenkopfs 247 auf derselben axialen Seite des Filterkopfs 203 münden und der Filterkörper 207 zu einem als Einheit wechselbaren Paket zusammengebaut ist.

Die Fig. 2 und 3 zeigen Einzelheiten des Filterkörpers 207. Die Umfangsnuten 233, die im dargestellten Ausführungsbeispiel durch eine einzige, schraubenlinienförmige Nut gebildet sind, sind in den Außenmantel eines aus einem einzigen Materialstück bestehenden Hohlzylinders beispielsweise durch spanabtragende Fertigung oder Schleifen eingearbeitet. Die Umfangsnuten 233 können jedoch auch in Umfangsrichtung ringförmig geschlossen sein, bzw. es können mehrere parallel zueinander verlaufende schraubenlinienförmige Nuten vorgesehen sein. Die zwischen den Nuten 233 verbliebenen Umfangsstege 235 stützen sich am Mantel des Gehäuseteils 209 ab. Der verglichen mit der radialen Höhe der Umfangsstege 235 dünnwandige Boden 275 jeder Umfangsnut 233 weist eine Vielzahl Filterlöcher 237 auf, über die das gefilterte Material abgeführt wird. Die Filterlöcher 237 sind in mehreren Reihen längs der Umfangsnuten 233 angeordnet, wobei benachbarte Reihen in Nutlängsrichtung Lücken gegeneinander versetzt sind.

Der Lochdurchmesser der Filterlöcher ist kleiner als 0,2 mm, vorzugsweise etwa 0,1 mm gewählt. Um derartig kleine Lochdurchmesser wirtschaftlich mit Laser- oder Elektronen-Strahlbearbeitungsverfahren herstellen zu können, ist die radiale Dicke des Bodens 275 jeder Umfangsnut 233 höchstens gleich dem zehnfachen Lochdurchmesser bemessen. Die Querbreite jeder Nut 233 ist so gewählt, daß der Boden 275 durch die benachbart anschließenden Bereiche der Umfangsstege 235 trotz einer geringen Wanddicke selbst für hohe Filterinnendrücke im Bereich von 200 bis 500 bar ausgesteift wird. Bei Bodenwandstärken in der Größenordnung von 1 mm haben sich Querabmessungen der Nuten 233 in Achsrichtung des Filterkörpers 207 von etwa 2 mm als brauchbar erwiesen, um trotz der Belastung durch den Filterinnendruck den Innenmantel 231 formstabil und damit durch Schaber reinigbar zu halten. Die Schaber verlaufen in jedem Fall schräg oder quer zu den Nuten.

Fig. 4 zeigt eine andere Ausführungsform eines Filterkörpers, bei der anstelle der Ringnuten in einem Raster angeordnete Vertiefungen 277 im Außenmantel eines aus einem einzigen Materialstück bestehenden, hohlzylindrischen Filterkörpers 279 eingearbeitet, beispielsweise eingebohrt sind. Die Vertiefungen 277 sind in der Fläche des Außenmantels des Filterkörpers 279 allseitig durch ein Netz von Stegen 281 voneinander getrennt, welches sich am Innenmantel der den Filterkörper 279 umschließenden Gehäusekammer abstützen und, entsprechend der Trennvorrichtung nach Fig. 1 den radialen Anpreßdruck der Schaber auf das Gehäuse ableiten. Der Durchmesser der Vertiefungen 277 und ihr gegenseitiger Abstand ist so gewählt, daß die Stege 281 aussteifend auf die Böden der Vertiefungen 277 wirken. Darüber hinaus ist die Verteilung der Stege 277 so gewählt, daß sich jeder der Schaber der Trennvorrichtung wiederum in jeder Drehstellung der Schaberwelle über mehrere Stege 281 gemeinsam abstützt, um Schäden an den Böden der Vertiefungen 277 zu vermeiden. Die Böden der Vertiefungen enthalten jeweils eine Vielzahl Filterlöcher 283 mit einem Durchmesser zwischen 80 und 200 µm. Der Boden jeder Vertiefung 277 ist höchstens 10 mal so dick wie der Lochdurchmesser der durch Laser- bzw. Elektronenstrahlbearbeitungsverfahren hergestellten Filterlöcher 283.

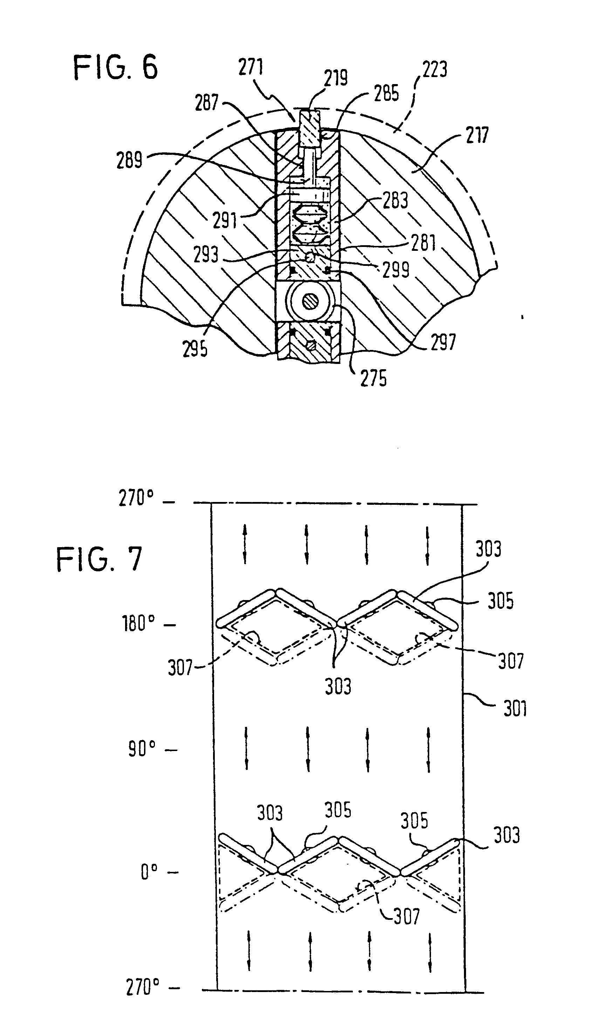

Fig. 6 zeigt Einzelheiten des Druckstempels 271. Der Druckstempel 273 ist in entsprechender Weise aufgebaut. Der Druckstempel 271 sitzt in einer radialen Bohrung 281 der Schaberwelle 217 und ist zusammen mit dem Schaber 219 radial von außen einsteckbar. Der Druckstempel 271 umfaßt eine in der Bohrung 281 verschiebbar geführte Hülse 283, die an ihrem radial äußeren Ende einen Führungsschlitz 285 für den Schaber 219 trägt. Radial innerhalb des Führungsschlitzes verengt sich die Hülse 283 zu einer Bohrung 287, in der engpassend jedoch radial verschiebbar ein Stift 289 sitzt, der mit seinem äußeren Ende am Schaber 219 anliegt und an seinem inneren Ende einen Kopf 291 trägt. Das innere Ende der Hülse 283 wird von einem Druckstück 293 verschlossen, welches mit einem Stift 295 in der Hülse 283 gehalten und von einem Dichtring 297 zur Hülse 283 hin abgedichtet ist. Zwischen dem Kopf 291 und dem Druckstück 293 ist ein Tellerfederpaket 299 eingespannt. Die vom Innenraum der Hülse 283 und dem Druckstück 293 umschlossene Kammer ist mit flüssigem oder plastischem Material ausgefüllt, welches daß Eindringen des zu filternden Materialgemisches verhindert. Beim Einbau der Druckstempel 271, 273 sind die Tellerfederpakete 299 ent-Spannt und die Stifte 291 nach radial außen gedrängt.

Die Druckstempel 271, 273 greifen in Querschnittsminderungen der Nockenstange 279 axial seitlich der Nocken 275, 277. Die Hülsen 283 können auf diese Weise insgesamt soweit in die Bohrungen 281 eingeschoben werden, daß die Schaber 219, 221 leicht gängig in den Filterkörper 207 eingeführt werden können. Durch axiales Verschieben der Nockenstange 279 werden die Hülsen 283 nach außen gedrängt und die Tellerfederpakete 299 über die Stifte 291 gespannt. Da der Umfang der Stifte 291 wesentlich kleiner ist als der Umfang der Hülsen 293, können die Stifte 291 im Dauerbetrieb nicht soweit festbacken, daß sie dem Druck der Tellerfederpakete 299 widerstehen würden. Die Stifte 291 und gegebenenfalls die Bohrungen 289 können paßgenau geschliffen sein. Da sich die Relativstellung der Hülse 283 nach dem Spannen nicht mehr ändert, wirkt sich Festbacken der Hülsen 283 an der Schaberwelle 217 im Dauerbetrieb nicht nachteilig aus.

Fig. 7 zeigt die Abwicklung einer Ausführungsform einer Schaberwelle 301, wie sie beispielsweise bei einer Trennvorrichtung der Fig. 1 bis 3 eingesetzt werden kann. Die Schaberwelle 301 umfaßt zwei um 180° gegeneinander versetzte Reihen von Schabern 303, die an Druckstempeln 305 ähnlich den Druckstempeln der Fig. 6 radial beweglich gegen den Filterkörper vorgespannt sind. Die Schaber 303 jeder Reihe sind in Zickzackform angeordnet und zwar so, daß sich jeweils zwei Schaber diametral in einer schräg zur Drehachse der Schaberwelle 501 verlaufenden Ebene gegenüberliegen. Die Enden der Schaber 503 jeder Reihe berühren sich oder nähern sich bis auf einen geringen Abstand. Die Spitzen der zickzackförmigrn Reihen liegen Sich in Umfangsrichtung jeweils gegenüber.

Der nicht näher dargestellte Filterkörper weist zwei diametral gegenüberliegende Reihen von Auslaßöffnungen 307 auf, die in Fig. 7 gestrichelt angedeutet sind. Die Auslaßöffnungen sind in Achsrichtung der Schaberwelle 301 gegeneinander versetzt und liegen im wesentlichen in der Fortsetzung der Bewegungsbahnen der Spitzen der zickzackförmigen Schaberreihen.

Die Schaberwelle 301 wird von einem nicht näher dargestellten Drehantrieb um etwas weniger als 180° periodisch hin und herbewegt, wobei die Schaber 303 das Rückstandsmaterial auf dem relativ kurzen Weg einer halben Umfangslänge zu den Auslaßöffnungen 307 befördern. Die Auslaßöffnungen 307 haben bevorzugt Rautenform und damit vergleichsweise großen Querschnitt, über den auch relativ große feste Rückstandsmaterialteile abgeführt werden können. Die Drehbewegung der Schaberwelle 301 ist in der Weise winkelversetzt, daß die Schaber 303 nicht über die Auslaßöffnungen 307 hinwegbewegt werden.

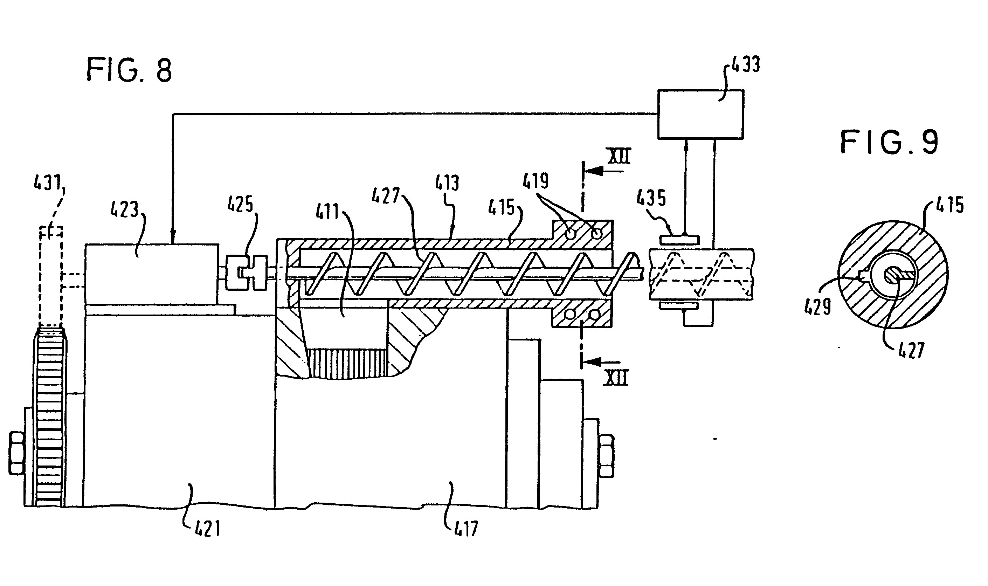

Die Fig. 8 und 9 zeigen eine andere Ausführungsform einer Auslaßsteuerung, wie sie bei einer Trennvorrichtung gemäß der Fig. 1 alternativ eingesetzt werden kann. An die gegebenenfalls über einem Sammelkanal miteinander verbundenen Auslaßöffnungen 411 für das Rückstandsmaterial von denen in Fig. 8 lediglich eine einzige dargestellt ist, schließt sich eine Dosierschnecke 413 an, deren Schneckenmantelrohr 415 am Filterkopf 417 gehalten ist und im Bereich seines Auslasses eine Kühleinrichtung, angedeutet durch Kühlkanäle 419 trägt. Ein den Filterkopf 417 haltender Rahmenteil 421 trägt eine Antriebsvorrichtung 423, die über eine Klauenkupplung 425 mit der Schnecke 427 der Dosierschnecke gekuppelt ist. Die Kühleinrichtung 419 kühlt den im Rückstandsmaterial enthaltenen thermoplastischen Kunststoff zu einer festen Masse ab, die in eine am Ausgang des Schneckenmantelrohrs 415 vorgesehene, axiale Nut 429 (Fig. 9) eingreift. Die Nut 429 verhindert das Drehen der erstarrten Kunststoff-Rückstandsmasse, womit bei Drehung der Schnecke 427 die erstarrte Masse aus dem Schneckenmantelrohr 415 strangförmig "ausgeschraubt" wird. Sofern die Antriebsbewegung der Dosierschnecke 413 von dem Antrieb der nicht näher dargestellten Schaberwelle abgeleitet wird, wie dies bei. 431 durch ein gestrichelt eingezeichnetes Zahnrad angedeutet ist, enthält der Antrieb 423 einen Freilauf, der die hin- und hergehende Bewegung der Schaberwelle in eine gleichsinnige Drehbewegung umsetzt. Da die Dosierschnecke 413 über die Kupplung 425 angetrieben wird, läßt sich der Filterkopf 417 entsprechend den Ausführungsformen der Fig. 1 problemlos abbauen.

Der Antrieb 423 der Dosierschnecke 413 wird über eine Steuerung 433 hinsichtlich seiner mittleren Drehzahl abhängig vom Filterinnendruck oder aber bei metallhaltigen Rückstandsmaterialien abhängig vom Metallanteil gesteuert. Der Antrieb 423 ist hierzu gegebenenfalls über eine steuerbare Kupplung mit der Dosierschnecke 423 verbunden. Zum Erfassen des Metallanteils ertrudiert die Dosierschnecke 413 das Rückstandsmaterial zwischen zwei Metallflächen eines kapazitiven Sensors 435. Zusätzlich oder statt der Regelung des Schneckenbetriebs kann die Steuerung 433 die Kühlleistung der Kühleinrichtung 419 steuern.

**Patentansprüche**

1. Vorrichtung zum Trennen von Materialien unterschiedlicher Konsistenz, insbesondere zum Trennen von Thermoplastkunststoff-Feststoff-Gemischen oder Gemischen aus unterschiedlich schmelzbaren Kunststoffen, mit einem Gehäuse (201, 203), einem in einer Kammer des Gehäuses (201, 203) gehaltenden, hohlzylindrischen Filterkörper (207) mit radialer Filterdurchlaßrichtung, einer in dem Gehäuse (201, 203) gelagerten gleichachsig zum Filterkörper (207) drehend angetriebenen Schaberwelle (217; 301), welche den Filterkörper (207) unter Bildung eines Ringraums (223) axial durchsetzt und in dem Ringraum (223) an ihrem Mantel wenigstens einen zum Filterkörper (207) radial abstehenden Schaber (219, 221; 303) trägt, mit einer das Materialgemisch unter Druck in den Ringraum (223) einführenden Fördereinrichtung, einem ersten, mit der Filteraußenseite verbundenen Materialauslaß (247) für das gefilterte Material und einem zweiten, mit der Filterinnenseite verbundenen Materialauslaß (255, 257; 307) mit Rückstaueigenschaft für das Rückstandsmaterial, dadurch gekennzeichnet, daß in der Umlaufbahn oder deren Umfangsverlängerung des bzw. der Schaber (219, 221; 303) jeweils wenigstens eine Auslaßöffnung (251, 253; 307) des zweiten Materialauslasses (255, 257; 307) vorgesehen ist, die den Filterkörper (207) radial durchbricht.

2. Vorrichtung nach Anspruch 1, dadurch gekennzeichnet, daß ein Reversierantrieb die Schaberwelle (217; 301) mit wechselnder Drehrichtung über einen vorgegebenen Drehwinkel kleiner als 360° hin und her bewegt und daß jeder der Auslaßöffnungen (251, 253) in Umfangsrichtung außerhalb der durch diesen Drehwinkel bestimmten Bewegungsbahnen der Schaber (219, 221) anschließend angeordnet ist.

3. Vorrichtung nach Anspruch 1 oder 2, dadurch gekennzeichnet, daß die Schaberwelle (217; 301) mehrere, in axialer Richtung nebeneinander, jedoch höchstens um die axiale Breite ihrer Bewegungsbahnen gegeneinander versetzt angeordnete Schaber (219, 221; 303) aufweist.

4. Vorrichtung nach Anspruch 3, dadurch gekennzeichnet, daß jedem Schaber (219, 221) eine Auslaßöffnung (251, 253) zugeordnet ist und daß in axialer Richtung nebeneinander angeordnete Schaber (219, 221) und Auslaßöffnungen (251, 253) in Umfangsrichtung um 180° versetzt sind.

5. Vorrichtung nach Anspruch 3 oder 4, dadurch gekennzeichnet, daß die Schaber (219, 221) axial verlaufende, Schaberkanten haben und daß die Auslaßöffnungen (251, 253) als axial verlaufende Schlitze in dem Filterkörper (207) ausgebildet sind.

6. Vorrichtung nach Anspruch 3, dadurch gekennzeichnet, daß die Schaber (303) in axialer Richtung in einer Reihe eng benachbart nebeneinander angeordnet sind.

7. Vorrichtung nach Anspruch 6, dadurch gekennzeichnet, daß am Umfang um 180° versetzt zwei Reihen in radialer Sicht zickzackförmig nebeneinander angeordnete Schaber (303) vorgesehen sind, daß sich die Eckpunkte der zickzackförmigen Reihen in Umfangsrichtung paarweise spiegelbildlich gegenüberliegen, daß zwei um 180° in Umfangsrichtung versetzte Reihen von Auslaßöffnungen (307) vorgesehen sind und daß die Auslaßöffnungen (307) jeder Reihe mit axialem Abstand voneinander und zu den Auslaßöffnungen (307) der anderen Reihe axial versetzt angeordnet sind.

8. Vorrichtung nach Anspruch 7, dadurch gekennzeichnet, daß zumindest ein Teil der Auslaßöffnungen (307) angenähert rautenförmigen Querschnitt hat.

9. Vorrichtung nach Anspruch 1 oder 3, dadurch gekennzeichnet, daß die Schaber in wenigstens einer Reihe axial nebeneinander angeordnet und in den Reihen zueinander parallel ausgerichtet sind.

10. Vorrichtung nach Anspruch 9, dadurch gekennzeichnet, daß zwei Reihen Schaber vorgesehen sind, in denen sich die Schaber paarweise diametral gegenüberliegen und daß die Schaber so gerichtet sind, daß sie gleichgerichtete Axialschubkräfte auf das Rückstandsmaterial ausüben.

11. Vorrichtung nach Anspruch 1, dadurch gekennzeichnet, daß der zweite Materialauslaß (255, 257) das Rückstandsmaterial über wenigstens einen mittels einer Kühleinrichtung (263) abkühlbaren Kühlkanal abführt, an dessen Auslaßende eine Querschnittsverengung (259, 261) vorgesehen ist.

12. Vorrichtung nach Anspruch 11, dadurch gckennzeichnet, daß die Querschnittsverengung (259, 261) mittels einer Heizeinrichtung (265) beheizbar ist.

13. Vorrichtung nach Anspruch 11, dadurch gekennzeichnet, daß sich die Kühlkanäle des zweiten materialauslasses (255, 257) in Abflußrichtung konisch erweitern.

14. Vorrichtung nach Anspruch 11 oder 12, dadurch gekennzeichnet, daß eine Temperaturregelung die Temperatur der Kühleinrichtung (263) und/oder der Heizeinrichtung (265) abhängig vom Druck des Materialgemisches in dem Filterkörper regelt.

15. Vorrichtung nach Anspruch 1, dadurch gekennzeichnet, daß der zweite Materialauslaß (411) eine Dosierschnecke (413) enthält und daß eine Kühleinrichtung (419) das Rückstandsmaterial im Bereich der Dosierschnecke (443) abkühlt.

16. Vorrichtung nach Anspruch 15, dadurch gekennzeichnet, daß die Dosierschnecke (413) ein im Bereich seines Auslaßendes mit wenigstens einer axialen Nut (429) versehenes Schneckenmantelrohr (415) aufweist.

17. Vorrichtung nach Anspruch 15, dadurch gekennzeichnet, daß der zweite Materialauslaß mehrere über den Umfang der Dosierschnecke verteilte Auslaßkanäle umfaßt, in die die Dosierschnecke über einen Teil der radialen Weite der Kanäle eingreift.

18. Vorrichtung nach Anspruch 15, dadurch gekennzeichnet, daß die Dosierschnecke gleichachsig zur Schaberwelle angeordnet ist und einen Schneckendurchmesser kleiner als der Innendurchmesser des Filterkörpers hat und daß der Ringraum zwischen Schaberwelle und Filterkörper über einen Ringraum oder wenigstens einen Kanal mit dem Umfangsflächenbereich der Dosierschnecke verbunden ist und das Rückstandsmaterial im wesentlichen radial in die Dosierschnecke einleitet.

19. Vorrichtung nach einem der Ansprüche 15 bis 18, dadurch gekennzeichnet, daß die Dosierschnecke (413) über einen Freilauf (423) mit der Schaberwelle in Antriebsverbindung steht.

20. Vorrichtung nach Anspruch 11 oder 15, dadurch gekennzeichnet, daß eine Steuerung dib Temperatur der Kühleinrichtung und/oder die Drehzahl der Dosierschnecke abhängig vom Druck des Materialgemisches in dem Filterkörper regelt.

21. Vorrichtung nach Anspruch 11 oder 15, wobei der Materialrückstand Metall enthält, dadurch gekennzeichnet, daß eine Steuerung (433) die Temperatur der Kühleinrichtung (419) und/oder die Drehzahl der Dosier-Schnecke abhängig vom Metallanteil des Rückstandsmaterials regelt.

22. Vorrichtung nach Anspruch 21, dadurch gekennzeichnet, daß die Steuerung (433) einen kapazitiven Sensor (435) Zur Ermittlung des Metallanteils im Rückstandsmaterial aufweist.

23. Vorrichtung nach einem der vorhergehenden Ansprüche, dadurch gekennzeichnet, daß die Schaberwelle axial beiderseits des Filterkörpers an gleich großen Wellendurchmessern in dem Gehäuse gelagert ist.

24. Vorrichtung nach einem der vorhergehenden Ansprüche, dadurch gekennzeichnet, daß die Schaberwelle (217) einen Rahmenteil (201) des Gehäuses durchsetzt, an dem auf der axial einen Seite der Filterkörper (207) gehalten ist und auf der axial anderen Seite die Schaberwelle (217) mit einem Antrieb gekuppelt ist.

25. Vorrichtung nach Anspruch 24, dadurch gekennzeichnet, daß sich an den zwischen der Schaberwelle (217) und dem Filterkörper (207) gebildeten Ringraum (223) ein zwischen der Schaberwelle (217) und einer Wellendurchtrittsöffnung in dem Rahmenteil (201) gebildeter Ringraum anschließt, in den ein Zuführkanal (225) der Fördereinrichtung quer einmündet.

26. Vorrichtung nach Anspruch 10, dadurch gekennzeichnet, daß axial zwischen dem Rahmenteil (201) und dem Filterkörper (207) ein Sammelringkanal (243) angeordnet ist, in den mit der Filteraußenseite verbundene axiale Kanäle (239) des ersteh Materialauslasses münden und der ferner mit Auslaßdüsen (247) verbunden ist.

**Claims**

1. Apparatus for separating materials of different consistencies, especially for the separation of mixtures of thermoplastic synthetic plastics materials and solids or mixtures of synthetic plastics msterials of different fusibilities, having a housing (201, 203), a hollowcylindrical filter body (207) with radial filter passage direction, held in a chamber of the housing (201, 203), a scraper shaft (217; 301) mounted in the housing (201, 203) and driven in rotation coaxially with the filter body (207), which scraper shaft passes axially through the filter body (207) forming an annular chamber (223), and carries on its outer surface in the annular chamber (223) at least one scraper (219, 221; 303) protruding radially to the filter body (207), with a conveyor device introducing the material mixture under pressure into the annular chamber (223), a first material outlet (247) connected with the filter exterior, for the filtered material, and a second material outlet (255. 257; 307). connected with the filter interror, with baffle property for the residual material, characterised in that in the path of circulation or the circumferential prolongation thereof of the scraper or each scraper (219, 221; 303) there is provided at least one outlet opening (251, 253; 307) of the second material outlet (255, 257; 307), which radially pierces the filter body (207).

2. Apparatus according to Claim 1, characterised in that a reversing drive system moves the scraper shaft (217; 301) with alternating direction of rotation to and fro over a predetermined angle of rotation smaller than 360° and in that each of the outlet openings (251, 253) is arranged adjoiningly in the circumferential direction outside the paths of movement of the scrapers (219, 221) determined by these angles of rotation.

3. Apparatus according to Claim 1 or 2, characterised in that the scraper shaft (217; 301) comprises a plurality of scrapers (219, 221; 303) arranged side by side in the axial direction but staggered in relation to one another at maximum by the axial width ot their paths of movement.

4. Apparatus according to Claim 3, characterised in that to each scraper (219, 221) an outlet opening (251, 253) is allocated and in that scrapers (219, 221) and outlet openings (251, 253) arranged side by side in the axial direction are staggered in the circumferential direction by 180°.

5. Apparatus according to Claim 3 or 4, characterised in that the scrapers (219, 22i) have axially extending scraper edges and in that the outlet openings (251, 253) are formed as axially extending slots in the filter body (207).

6. Apparatus according to Claim 3, characterised in that the scrapers (303) are arranged closely adjacently side by side in a row in the axial direction.

7. Apparatus according to Claim 6, characterised in that two rows of scrapers (303) arranged side by side in zig-zag form in radial view are provided staggered by 180° on the circumference, in that the corner points of the zigzag-shaped rows lie oppositely in mirror image in pairs in the circumferential direction, in that two rows, staggered by 180° in the circumferential direction, of outlet openings (307) are provided and in that the outlet openings (307) of each row are arranged with axial spacing from one another and axially staggered in relation to the outlet openings (307) of the other row.

8. Apparatus according to Claim 7, characterised in thst at least a part of the outlet openings (307) has approximately lozenge-shaped cross-section.

9. Apparatus according to Claim 1 or 3, characterised in that the scrapers in at least one row are arranged axially side by side and aligned parallel to one another in the rows.

10. Apparatus according to Claim 9, characterised in that two rows of scrapers are provided in which the scrapers lie dismetrically oppositely in pairs and in that the scrapers are so directed that they exert axial thrust forces in the same direction upon the residual material.

11. Apparatus according to Claim 1, characterised in that the second material outlet (255, 257) removes the residual material by way of at least one cooling passage coolable by means of a cooling apparatus (263), at the outlet end of which passage a cross-sectional constriction (259, 261) is provided.

12. Apparatus according to Claim 11, characterised in that the cross-sectional constriction (259, 261) is heatable by means of a heating apparatus (265).

13. Apparatus according to Claim 11, charscterised in that the cooling passages of the second material outlet (255, 257) widen conically in the outflow direction.

14. Apparatus according to Claim 11 or 12, characterised in that a temperature regulation system regulates the temperature of the cooling apparatus (263) and/or of the heating apparatus (265) in dependence upon the pressure of the material mixture in the filter body.

15. Apparatus according to Claim 1, characterised in that the second material outlet (411) contains a quantityregulating worm (413) and in that a cooling apparatus (419) cools the residual material in the region of the quantityregulating worm (413).

16. Appsratus according to Claim 15, characterised in that the quantity-regulating worm (413) comprises a wormenclosing tube (415) provided with at least one axial groove (429) in the region of its outlet end.

17. Apparatus according to Claim 15, characterised in that the second material outlet comprises a plurality of outlet passages distributed over the circumference of the quantity-regulating worm, in which the quantity-regulating worm engages over a part of the radial width of the passages.

18. Apparatus according to Claim 15, characterised in that the quantity-regulating worm is arranged coaxially with the scraper shaft and has a worm diameter smaller than the internal diameter of the filter body and in that the annular space between scraper shaft and filter body is connected by way of an annular space or at least one passage with the circumferential surface region of the quantityregulating worm and introduces the residual material substantially radially into the quantity-regulating worm.

19. Apparatus according to one of Claims 15 to 18, characterised in that the quantity-regulating worm is in drive connection with the scraper shaft through a freewheel.

20. Apparatus according to Claim 11 or 15, characterised in that a control system regulates the temperature of the cooling apparatus and/or the rotation rate of the quantity-regulating worm in dependence upon the pressure of the material mixture in the filter body.

21. Apparatus according to Claim 11 or 15, where the material residue contains metal, characterised in that a control system (433) regulates the temperature of the cooling apparatus and/or the rotation rate of the quantityregulating worm in dependence upon the metal proportion of the residual material.

22. Apparatus according to Claim 21, characterised in that the control system (433) comprises a capacitative sensor (435) for ascertaining the proportion of metal in the residual material.

23. Apparatus according to one of the preceding Claims, characterised in that the scraper shaft is mounted in the housing axially on both sides of the filter body on shaft diameters of equal size.

24. Apparatus according to one of the preceding Claims, characterised in that the scraper shaft (217) penetrates a frame part of the housing on which the filter body (207) is held on one axial side and the scraper shaft (217) is coupled with a drive system on the other axial side.

25. Apparatus according to Claim 24, characterised in that the annular space (223) formed between the scraper shaft (217) and the filter body (207) is adjoined by an annular space formed between the scraper shaft (217) and a shaft passage opening in the frame part (201), into which latter annular space there opens transversely a feed passage (225) of the conveyor apparatus.

26. Apparatus according to Claim 10, characterised in that a collector ring passage (243) is arranged axially between the frame part (201) and the filter body (207), into which ring passage there open axial passages, connected with the filter exterior, of the first material outlet and which ring passage is further connected with outlet nozzles.

**Revendications**

1. Dispositif pour séparer des matières de consistance différente, en particulier pour séparer des mélanges de matières thermoplastiques et de matières solides, ou des mélanges de matières plastiques de points de fusion différents, comportant un boîtier (201, 203), un corps de filtre cylindrique creux (207) retenu dans une chambre du boîtier (201, 203) avec une direction de passage de filtre radiale, un arbre a racloirs (217; 301) entraîné en rotation monté dans le boîtier (201, 203) coaxialement par rapport au corps de filtre (207) qui traverse axialement le corps de filtre (207) en formant une chambre annulaire et qui porte dans la chambre annulaire (223) sur son enveloppe au moins un racloir (219, 221; 303) faisant saillie radialement par rapport au corps de filtre (207), comportant un dispositif de transport introduisant le mélange de matières sous pression dans la chambre annulaire (223), une première sortie de matières (247) reliée a la face extérieure du filtre pour la matière filtrée et une seconde sortie de matières (255, 257; 307) reliée a la face intérieure du filtre, présentant des caractéristiques de retenue pour la matière résiduelle, caractérisé en ce que, dans la trajectoire périphérique du ou des racloirs (219, 221; 303) ou son prolongement périphérique, est prévue respectivement au moins une ouverture de sortie (251, 253; 307) de la deuxième sortie de matières (255, 257; 307) qui traverse radialement le corps de filtre (207).

2. Dispositif selon la revendication 1, caractérisé en ce qu'une transmission réversible fait effectuer à l'arbre a racloirs (217; 301) des mouvements de va-et-vient sur un angle de rotation prédéterminé inférieur à 360° avec alternance du sens de rotation, et en ce que chacune des ouvertures de sortie (251, 253) est placée en direction périphérique à l'extérieur des trajectoires de déplacement des racloirs (219, 221) déterminées par cet angle de rotation, en position contiguë.

3. Dispositif selon la revendication 1 ou 2, caractérisé en ce que l'arbre à racloirs (217; 301) comporte plusieurs racloirs (219, 221; 303) contigus en direction axiale mais décalés mutuellement au plus de la largeur axiale de leurs trajectoires de déplacement.

4. Dispositif selon la revendication 3, caractérisé en ce qu'il correspond à chaque racloir (217, 221) une ouverture de sortie (251, 253) et en ce que les racloirs (219, 221) et les ouvertures de sortie (251, 253) contigus en direction axiale sont décalés de 180° en direction périphérique.

5. Dispositif selon la revendication 3 ou 4, caractérisé en ce que les racloirs (219, 221) comportent des bords de raclage dirigés axialement et en ce que les ouvertures de sortie (251, 253) sont réalisées sous la forme de fentes axiales dans le corps de filtre (207).

6. Dispositif selon la revendication 3, caractérisé en ce que les racloirs (303) sont disposés tout prés les uns des autre selon une rangée en direction axiale.

7. Dispositif selon la revendication 6, caractérisé en ce que deux rangées de racloirs (303) sont prévues en zigzag dans des positions radialement en regard avec décalage de 180° sur la périphérie, en ce que les sommets des rangées en zigzag sont opposés symétriquement deux à deux en direction périphérique, en ce que deux rangées d'ouvertures de sortie (307) décalées de 180° en direction périphérique sont prévues et en ce que les ouvertures de sortie (307) de chaque rangée sont disposées à distance axiale mutuelle et avec décalage axial par rapport aux ouvertures de sortie (307) de l'autre rangée.

8. Dispositif selon la revendication 7, caractérisé en ce qu'au moins une partie des ouvertures de sortie (307) présente une section droite en losange.

9. Dispositif selon la revendication 1 ou 3, caractérisé en ce que les racloirs sont disposés sur au moins une rangée dans des positions axialement contigues et sont orientés parallèlement entre eux dans les rangées

10. Dispositif selon la revendication 9 caractérisé en ce que deux rangées de racloirs sont prévues, dans lesquelles les racloirs sont deux à deux diamétralement opposés et en ce que les racloirs sont dirigés de façon à exercer sur la matière résiduelle des poussées axiales dirigées dans le même sens.

11. Dispositif selon la revendication 1, caractérisé en ce que la seconde sortie de matières (255, 257) évacue la matière résiduelle par l'intermédiaire d'au moins un canal de refroidissement pouvant être refroidi grâce à un dispositif de refroidissement (263) à l'extrémité de sortie duquel est prévu un rétrécissement de section droite ou étranglement (259, 261).

12. Dispositif selon la revendication 11, caractérisé en ce que le rétrécissement de section droite (259, 261) peut etre chauffé au moyen d'un dispositif de chauffage (265).

13. Dispositif selon la revendication 11, caractérisé en ce que les canaux de refroidissement de la seconde sortie de matière (255, 257) s'élargissent en forme de cône dans la direction d'évacuation.

14. Dispositif selon la revendication 11 ou 12, caractérisé en ce qu'un dispositif de réglage de la température règle la température du dispositif de refroidissement (263) et/ou du dispositif de chauffage (265) en fonction de la pression du mélange de matières dans le corps de filtre.

15. Dispositif selon la revendication 1, caractérisé en ce que la seconde sortie de matières (411) comprend une vis sans fin de dosage (413) et en ce qu'un dispositif de refroidissement (419) refroidit la matière résiduelle au voisinage de la vis sans fin de dosage (413).

16. Dispositif selon la revendication 15, caractérisé en ce que la vis sans fin de dosage (413) comporte au voisinage de son extrémité de sortie un tube de protection de vis sans fin (415) comportant au moins une rainure axiale (429).

17. Dispositif selon la revendication 15, caractérisé en ce que la seconde sortie de matières comprend plusieurs canaux de sortie répartis sur la périphérie de la vis sans fin de dosage, dans lesquels la vis sans fin de dosage s'engage sur une partie de la largeur radiale des canaux.

18. Dispositif selon la revendication 15, caractérisé en ce que la vis sans fin de dosage est disposée coaxialement par rapport à l'arbre à racloirs et présente un diamètre inférieur au diamètre intérieur du corps de filtre et en ce que l'intervalle annulaire encre l'arbre à racloirs et le corps de filtre est relié par une chambre annulaire ou au moins un canal à la zone superficielle périphérique de la vis sans fin de dosage et introduit la matière résiduelle sensiblement radialement dans la vis sans fin de dosage.

19. Dispositif selon l'une des revendications 15 à 18, caractérisé en ce que la vis sans fin de dosage (413) est reliée cinématiquement à l'arbre à racloirs par l'intermédiaire d'un accouplement à roue libre (423).

20. Dispositif selon la revendication 11 ou 15, caractérisé en ce qu'un mécanisme de commande règle la température du dispositif de refroidissement et/ou la vitesse de rotation de la vis sans fin de dosage en fonction de la pression du mélange de matières dans le corps de filtre.

21. Dispositif selon la revendication 11 ou 15 dans lequel la matière résiduelle renferme du métal, caractérisé en ce qu'un mécanisme de commande (433) règle la température du dispositif de refroidissement (419) et/ou la vitesse de rotation de la vis sans fin de dosage en fonction de la proportion de métal de la matière résiduelle.

22. Dispositif selon la revendication 21, caractérisé en ce que le mécanisme de commande (433) comporte un capteur capacitif (435) pour déterminer la proportion de métal de la matière résiduelle.

23. Dispositif selon l'une des revendications précédentes, caractérisé en ce que l'arbre a racloirs est placé axialement des deux côtés du corps de filtre sur des diamètres d'arbre égaux dans le boîtier.

24. Dispositif selon l'une des revendications précédentes, caractérisé en ce que l'arbre à racloirs (217) traverse une partie de châssis (201) du boîtier, sur laquelle, à une extrémité axiale, est maintenu le corps de filtre (207), tandis qu'à l'autre extrémité axiale, l'arbre à racloirs est accouplé à une transmission.

25. Dispositif selon la revendication 24, caractérisé en ce qu'une chambre annulaire dans laquelle un canal d'amené (225) du dispositif de transport débouche transversalement, chambre formée entre l'arbre à racloirs (217) et une ouverture de passage d'arbre dans la partie de chassis (201) se raccorde à la chambre annulaire (223) formée entre l'arbre à racloirs (217) et le corps de filtre (207).

26. Dispositif selon la revendication 10, caractérisé en ce qu'un canal collecteur annulaire (243) est disposé axialement entre la partie de chassis (201) et le corps de filtre (207), canal col lecteur dans lequel débouchent descanaux axiaux (239) de la première sortie de matière reliés à la face extérieure du filtre et qui est en outre relié à des ajutages de sortie (247).

# FIG. 1

# FIG. 2

# FIG. 3

# FIG. 4

3

# FIG. 5

FIG. 6

FIG. 7

FIG. 9

FIG. 8